# EUROPÄISCHE PATENTANMELDUNG

(11) **EP 2 922 024 A1**
(43) Veröffentlichungstag der Anmeldung: **23.09.2015**
(21) Anmeldenummer: 14160995.8
(22) Anmeldetag: 21.03.2014
(51) Int. Cl.: G06T 7/00

(54) **Verfahren zur Lokalisation von Aneurysmen**

(71) Anmelder: CVTec Cerebrovasular Technologies GmbH, 1150 Wien (AT)
(72) Erfinder: Mach, Georg, 1170 Wien (AT)
(74) Vertreter: Wildhack & Jellinek

(57) **Zusammenfassung**

Die Erfindung betrifft ein Verfahren zur Lokalisation von Abbildern von Aneurysmen (Y) in dreidimensionalen Abbildern (B),
- wobei für jedes Voxel (v) einzeln geprüft wird, ob der dem jeweiligen Voxel zugeordnete Messwert (m) einem Kriterium (K) genügt und diesfalls dem Voxel (v) ein Segmentationsbit (s) zugeordnet wird, und die Teilmenge (T) der das Segmentationsbit (s) enthaltenden Voxel (v) ermittelt wird,
- wobei in der Teilmenge (T) verlaufende Pfaden (P) gesucht werden, die durch eine Anzahl von auf den Pfaden (P) liegenden und miteinander über Kanten (e) verbundenen Knoten (n) repräsentiert werden, und wobei alle Pfade (P) einen zusammenhängenden Graphen bilden,
- wobei nach Endknoten (n) gesucht wird, die über eine einzige Kante (e) mit einem weiteren Knoten (n) verbunden sind,
- wobei ausgehend vom Endknoten (E) der Anschlussknoten (A) bestimmt wird, der über wenigstens drei Kanten (e) mit weiteren Knoten (n) verbunden ist,
- wobei jeweils die Länge (I) des Pfads zwischen dem Endknoten (E) und dem Anschlussknoten (A) ermittelt wird,
- wobei die Dicke (d) des Pfads (P) ermittelt wird, und für den Fall, dass das Verhältnis zwischen Länge (I) und Dicke (d) des Pfads einen vorgegebenen Schwellenwert (t) unterschreitet, ein Abbild eines Aneurysmas (Y) erkannt wird.

## Beschreibung

Die Erfindung betrifft ein Verfahren zur automationsunterstützten Lokalisation von Abbildern von Aneurysmen in dreidimensionalen Abbildern, insbesondere in MR- oder CT-Schichtbildern.

Aus dem Stand der Technik sind Methoden zur Aufnahme von dreidimensionalen Abbildern allgemein bekannt. Insbesondere ist es bekannt, Aufnahmen des menschlichen Gehirns mittels Magnetresonanztomographie zu erstellen. Auch sind CT- und Angiographie-Verfahren bekannt, die mittels Röntgenstrahlung dreidimensionale Bilder von zu untersuchenden Personen bzw. von Gehirnen erstellen.

Nachteil dieser Vorgehensweise ist es, dass die Signale dem jeweils behandelnden Arzt in der Regel ohne zusätzliche Aufbereitung und Vermessung zur Verfügung gestellt werden und dass es sehr schwierig bzw. aufwendig ist, bestimmte Strukturen in den erstellten Bildern zu erkennen bzw. diese Strukturen zu vermessen.

Aufgabe der Erfindung ist es daher, ein Verfahren zur Verfügung zu stellen, mit dem automatisiert Strukturen in Schichtbildern lokalisiert werden können, die Abbilder von Aneurysmen enthalten.

Die Erfindung löst diese Aufgabe bei einem Verfahren der eingangs genannten Art mit den Merkmalen des Patentanspruchs 1. Erfindungsgemäß ist bei einem Verfahren zur Lokalisation von Abbildern von Aneurysmen in dreidimensionalen Abbildern, insbesondere in Angiographie-, MR- oder CT-Schichtbildern, umfassend eine Anzahl von dreidimensional, insbesondere rasterförmig und/oder strukturiert, angeordneten Voxeln, denen jeweils mindestens ein Messwert zugeordnet ist, vorgesehen,
- dass für jedes Voxel einzeln geprüft wird, ob der dem jeweiligen Voxel zugeordnete Messwert einem vorab vorgegebenen Kriterium genügt und für den Fall, dass der Messwert das Kriterium erfüllt, dem jeweiligen Voxel ein Segmentationsbit zugeordnet wird, und die Teilmenge der das Segmentationsbit enthaltenden Voxel ermittelt wird,
- dass eine Anzahl von im Inneren der Teilmenge verlaufenden Pfaden gesucht wird, die innerhalb der Teilmenge verlaufenden Verbindungen repräsentieren, wobei die Pfade durch eine Anzahl von auf den Pfaden liegenden und miteinander über Kanten verbundenen Knoten repräsentiert werden, und wobei alle Pfade einen zusammenhängenden Graphen bilden,
- dass nach Knoten gesucht wird, die lediglich über eine einzige Kante mit einem weiteren Knoten verbunden sind und diese Knoten als Endknoten markiert werden,
- dass ausgehend vom jeweiligen Endknoten der jeweils nächste Knoten bestimmt wird, der über wenigstens drei Kanten mit weiteren Knoten verbunden ist und dieser Knoten als Anschlussknoten diesem Endknoten zugewiesen wird,
- dass für die Endknoten jeweils die Länge des Pfads zwischen dem Endknoten und dem jeweiligen Anschlussknoten ermittelt wird, und
- dass von zumindest einem Punkt auf dem Pfad zwischen dem Endknoten und dem Anschlussknoten aus der maximale Radius ermittelt wird, innerhalb dessen sich ausschließlich der Teilmenge zugehörige Voxel befinden und das Doppelte dieses maximalen Radius' dem Endknoten als Dicke des Pfads zugewiesen wird, und für den Fall, dass das Verhältnis zwischen Länge und Dicke des Pfads einen vorgegebenen Schwellenwert unterschreitet, die Umgebung des Pfades, insbesondere im Bereich des Endknotens, als Bereich angesehen wird, in dem sich ein Abbild eines Aneurysmas befindet.. Mit diesem Vorgehen können auf einfache Weise Abbilder von Aneurysmen detektiert und einem behandelnden Arzt zur Verfügung gestellt werden.

Eine besonders einfache Art der Identifikation von Abbildern von Blutgefäßen sieht vor, dass bei der Zuordnung des Segmentationsbits zu den Voxeln ein Schwellenwertvergleich verwendet wird,
- wobei der jeweilige dem Voxel zugeordnete Messwert mit einem vorab vorgegebenen Schwellenwert verglichen wird und das Segmentationsbit für das jeweilige Voxel bei Überschreiten oder bei Unterschreiten des Schwellenwerts gesetzt wird oder
- wobei der Gradient des jeweiligen Messwerts ermittelt wird und das Segmentationsbit für das jeweilige Voxel gesetzt wird, wenn der Gradient des jeweiligen Messwerts einen vorgegebenen weiteren Schwellenwert überschreitet oder unterschreitet.

Zum Ausschluss von irrtümlich als Aneurysmen identifizierbaren Strukturen kann vorgesehen sein, dass Pfade, deren zugeordnete Länge einen vorgegebenen Wert unterschreitet, nicht für die Suche nach Aneurysmen herangezogen werden.

Zum selben Zweck kann vorgesehen sein, dass Pfade, deren Endknoten sich im Randbereich des dreidimensionalen Abbildes befinden, nicht für die Erkennung von Aneurysmen herangezogen werden.

Eine verbesserte Aufnahme von Blutgefäßen, die zu einer verbesserten Erkennungsgenauigkeit führt, sieht vor, dass als dreidimensionales Abbild das Differenzbild zweier dreidimensionaler Schichtbilder herangezogen wird, wobei das erste der Schichtbilder ohne Gabe eines Kontrastmittels erstellt wurde und das zweite dreidimensionale Schichtbild erstellt wurde, nachdem dem Probanden, dessen Gefäße aufgezeichnet wurden, ein Kontrastmittel verabreicht wurde, - dass anschließend voxelweise die Differenz zwischen den Messwerten der einzelnen Voxel ermittelt wird, - dass das so ermittelte Differenzbild als dreidimensionales Abbild für die Lokalisation von Abbildern von Aneurysmen herangezogen wird.

Eine besonders genaue Überlagerung der Bilder und besonders genaue Ergebnisse können ermittelt werden, indem die beiden dreidimensionalen Schichtbilder vor der Differenzbildung derart rotiert oder verschoben werden, dass gleiche abgebildete Strukturen in denselben Voxeln abgebildet sind.

Zur genauen Bestimmung eines Volumenbereichs innerhalb des dreidimensionalen Abbilds kann vorgesehen sein, dass nach der Erkennung eines Aneurysmas eine Ebene festgelegt wird, die die Verbindungskante des Endknotens zum Anschlussknoten durchschneidet und den Bereich des Abbilds des Aneurysmas von den übrigen Voxeln der Teilmenge abtrennt, wobei sämtliche Voxel gesucht werden, die sich auf derselben Seite der Ebene befinden wie der Endknoten des Aneurysmas und die sich vom Endknoten des Aneurysmas ausschließlich über innerhalb der Teilmenge befindliche Voxel erreichen lassen und diese Voxel dem Aneurysma zugeordnet werden.

Um das Volumen eines Aneurysmas vorteilhaft bestimmen zu können, kann vorgesehen sein, dass zur Bestimmung des Volumens eines aufgefundenen Aneurysmas die Anzahl und/oder das Volumen dieser Voxel ermittelt wird und die Anzahl der dem Aneurysma zugeordneten Voxel oder das Gesamtvolumen dieser Voxel als Maß für das Volumen des Aneurysmas herangezogen wird.

Die Erfindung löst diese Aufgabe bei einer Anordnung der eingangs genannten Art mit den Merkmalen des Patentanspruchs 8. Die Erfindung betrifft eine Anordnung zur Lokalisation von Abbildern von Aneurysmen in dreidimensionalen Abbildern, insbesondere in MR- oder CT-Schichtbildern, umfassend einen Speicher in dem Abbilder mit einer Anzahl von dreidimensional, insbesondere rasterförmig und/oder strukturiert, angeordneten Voxeln, denen jeweils mindestens ein Messwert zugeordnet ist.

Hierbei ist vorgesehen, dass eine dem Speicher nachgeschaltete Verarbeitungseinheit vorgesehen ist, der die Abbilder des Speichers zugeführt sind und die für jedes Voxel einzeln prüft, ob der dem jeweiligen Voxel zugeordnete Messwert einem vorab vorgegebenen Kriterium genügt und für den Fall, dass der Messwert das Kriterium erfüllt, dem jeweiligen Voxel ein Segmentationsbit zuordnet, und somit die Teilmenge der das Segmentationsbit enthaltenden Voxel ermittelt,
- wobei die Verarbeitungseinheit eine Anzahl von im Inneren der Teilmenge verlaufenden Pfaden sucht, die innerhalb der Teilmenge verlaufenden Verbindungen repräsentieren, wobei die Pfade durch eine Anzahl von auf den Pfaden liegenden und miteinander über Kanten verbundenen Knoten repräsentiert sind, und wobei alle Pfade einen zusammenhängenden Graphen bilden,
- wobei die Verarbeitungseinheit nach Knoten sucht, die lediglich über eine einzige Kante mit einem weiteren Knoten verbunden sind und diese Knoten als Endknoten markiert,
- wobei die Verarbeitungseinheit ausgehend vom jeweiligen Endknoten den jeweils nächsten Knoten bestimmt, der über wenigstens drei Kanten mit weiteren Knoten verbunden ist und dieser Knoten als Anschlussknoten diesem Endknoten zuweist,
- wobei die Verarbeitungseinheit für die Endknoten jeweils die Länge des Pfads zwischen dem Endknoten und dem jeweiligen Anschlussknoten ermittelt, und
- wobei die Verarbeitungseinheit von zumindest einem Punkt auf dem Pfad zwischen dem Endknoten und dem Anschlussknoten aus der maximale Radius ermittelt, innerhalb dessen sich ausschließlich der Teilmenge zugehörige Voxel befinden und sie das Doppelte dieses maximalen Radius' dem Endknoten als Dicke des Pfads zuweist, wobei sie für den Fall, dass bei das Verhältnis zwischen Länge und Dicke des Pfads einen vorgegebenen Schwellenwert unterschreitet, die Umgebung des Pfades, insbesondere im Bereich des Endknotens, als Bereich markiert, in dem sich ein Abbild eines Aneurysmas befindet.

Mit dieser Anordnung können auf einfache Weise Abbilder von Aneurysmen detektiert und einem behandelnden Arzt zur Verfügung gestellt werden.

Eine besonders einfache Art der Identifikation von Abbildern von Blutgefäßen sieht vor, dass die Verarbeitungseinheit bei der Zuordnung des Segmentationsbits zu den Voxeln einen Schwellenwertvergleich verwendet,
wobei sie den jeweiligen dem Voxel zugeordneten Messwert mit einem vorab vorgegebenen Schwellenwert vergleicht und das Segmentationsbit für das jeweilige Voxel bei Überschreiten oder bei Unterschreiten des Schwellwerts durch den jeweiligen Messwert setzt, oder
wobei sie den Gradienten des jeweiligen dem Voxel zugeordneten Messwerts bildet und diesen mit einem vorab vorgegebenen Schwellenwert vergleicht und das Segmentationsbit für das jeweilige Voxel bei Überschreiten oder bei Unterschreiten des Schwellwerts durch den jeweiligen Gradienten setzt.

Zum Ausschluss von irrtümlich als Aneurysmen identifizierbaren Strukturen kann vorgesehen sein, dass die Verarbeitungseinheit Pfade, deren zugeordnete Länge einen vorgegebenen Wert unterschreitet, verwirft und nicht für die Suche nach Aneurysmen heranzieht.

Zum selben Zweck kann vorgesehen sein, dass die Verarbeitungseinheit Pfade, deren Endknoten sich im Randbereich des dreidimensionalen Abbildes befinden, verwirft und nicht für die Erkennung von Aneurysmen heranzieht.

Eine verbesserte Aufnahme von Blutgefäßen, die zu einer verbesserten Erkennungsgenauigkeit führt, kann erreicht werden, indem eine Differenzbildungseinheit vorgesehen ist, der erstellte und zwischengespeicherte oder abgespeicherte Schichtbilder zugeführt sind,
- wobei die Differenzbildungseinheit anschließend voxelweise die Differenz zwischen den Messwerten der einzelnen Voxel ermittelt und derart ein Differenzbild erstellt und als Abbild für die weitere Verarbeitung durch die Verarbeitungseinheit zur Verfügung hält.

Eine besonders genaue Überlagerung der Bilder und besonders genaue Ergebnisse können erreicht werden, indem insbesondere die Differenzbildungseinheit die beiden dreidimensionalen Schichtbilder vor der Differenzbildung derart rotiert oder verschiebt, dass gleiche abgebildete Strukturen in denselben Voxeln abgebildet werden.

Eine bevorzugte Anordnung, die eine einfache Aufnahme von dreidimensionalen Abbildern ermöglicht, sieht vor, dass eine Aufnahmeeinheit zur Aufnahme von dreidimensionalen Abbildern, wobei die von der Aufnahmeeinheit erstellten Abbilder dem Speicher zugeführt werden.

Eine vorteilhafte Darstellung der Aneurysmen wird möglich, wenn eine der Verarbeitungseinheit nachgeschaltete Anzeigeeinheit, insbesondere einen Bildschirm, zur Darstellung des Abbilds, der neben jeweiligen Abbild auch die Position des jeweiligen Aneurysmas graphisch darstellt.

Zur genauen Bestimmung eines Volumenbereichs innerhalb des dreidimensionalen Abbilds kann vorgesehen sein, dass die Verarbeitungseinheit zur Erkennung eines Aneurysmas eine Ebene festlegt, die die Verbindungskante des Endknotens zum Anschlussknoten durchschneidet und den Bereich des Abbilds des Aneurysmas von den übrigen Voxeln der Teilmenge abtrennt, wobei sie sämtliche Voxel sucht, die sich auf derselben Seite der Ebene befinden wie der Endknoten des Aneurysmas und die sich vom Endknoten des Aneurysmas ausschließlich über innerhalb der Teilmenge befindliche Voxel erreichen lassen, wobei die Verarbeitungseinheit diese Voxel dem Aneurysma zuordnet und gegebenenfalls die Anzeigeeinheit zur graphischen Darstellung der dem Aneurysma zugeordneten Voxel veranlasst.

Um das Volumen eines Aneurysmas vorteilhaft bestimmen zu können, kann vorgesehen sein, dass die Verarbeitungseinheit zur Bestimmung des Volumens eines aufgefundenen Aneurysmas die Anzahl und/oder das Volumen dieser Voxel ermittelt und die Anzahl der dem Aneurysma zugeordneten Voxel oder das Gesamtvolumen dieser Voxel als Maß für das Volumen des Aneurysmas heranzieht und insbesondere die Anzeigeeinheit zur graphischen Darstellung des Volumens des Aneurysmas veranlasst.

Vorteilhaft kann das erfindungsgemäße Verfahren auch durch ein Programm umgesetzt werden, das auf einem Computer abläuft.

Ein bevorzugtes Ausführungsbeispiel wird anhand der folgenden Zeichnungsfiguren näher dargestellt. **Fig. 1a** und **Fig. 1b** zeigen schematisch einen Schnitt durch ein menschliches Gehirn. **Fig. 2** zeigt schematisch die Erstellung eines dreidimensionalen Schichtbilds als Differenzbild von zwei Schichtbild-Aufnahmen. **Fig. 3** zeigt schematisch einen Teil eines Schnitts sowie einen Graphen, der die Zusammenhänge der Blutgefäße im Gehirn repräsentiert. **Fig. 4** zeigt die Bestimmung von Länge und Dicke eines Pfads. **Fig. 5** zeigt schematisch einen Bereich des dreidimensionales Abbilds, der als Aneurysma erkannt wurde. **Fig. 6** zeigt eine Vorrichtung zur Detektion von Aneurysmen.

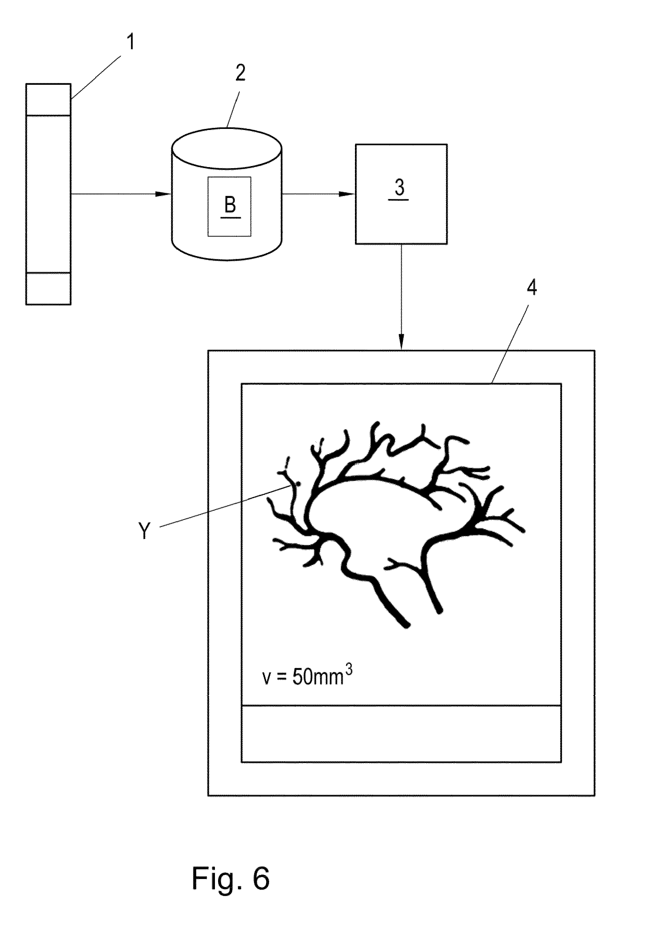

Aufgrund von pathologischen Einflüssen kann der Fall auftreten, dass sich im Bereich von Blutgefäßen, insbesondere im Gehirn, Aussackungen, sogenannte Aneurysmen Y **(****Fig. 6****)** ausbilden. Solche Aneurysmen Y führen zu Verwirbelungen im Blutfluss und können im schlimmsten Fall aufreißen, was zu einer äußerst gefährlichen Hirnblutung führt.

Ziel ist es daher, solche Aneurysmen Y aufzuspüren und einem Operateur die genaue Lage des jeweiligen Aneurysmas Y mitzuteilen, damit dieser das Aneurysma Y operativ entfernen oder verfüllen kann. In einem ersten Schritt wird eine Aufnahme des menschlichen Gehirns vorgenommen. Diese Aufnahme kann mit unterschiedlichen dreidimensionalen bildgebenden Verfahren vorgenommen werden, bevorzugt werden hierfür die allgemein bekannten Verfahren DSA, MR und CT eingesetzt.

Bei der Verwendung von digitaler Subtraktions-Angiographie (DAS) und CT-Verfahren ist es möglich, aufgrund der unterschiedlichen Durchlässigkeit für Röntgenstrahlung von Blutgefäßen und anderen Gehirnstrukturen eine relativ genaue Lage und Ausrichtung der Blutgefäße identifiziert werden. Beim CT-Verfahren ist es möglich, den Kontrast, d.h. die Differenz der Messwerte für Blutgefäße bzw. übrige Gehirnstrukturen, durch Gabe eines Kontrastmittels zu erhöhen. Bei der DSA wird das ausgenutzt, um 2 Bildsequenzen zu machen: eine Sequenz ohne Kontrastmittel (die Maske) und eine Sequenz mit Kontrastmittel. Danach wird die Maske von der Kontrastmittelsequenz subtrahiert, so dass nur noch die von Kontrastmittel durchflossenen Blutgefäße übrig bleiben.

Bei MR-Tomographie kann aufgrund unterschiedlicher Relaxationszeiten verschiedener Gewebe in den Blutgefäßen und in den übrigen Teilen des Gehirns zur Lage und Ausrichtung der Blutgefäße zu gelangen. Die MR-Tomographie nutzt den Eigenspin unterschiedlicher Atomkerne, wie beispielsweise Wasserstoff oder Phosphor. Zuerst werden die Kerne durch das starke Magnetfeld alle parallel ausgerichtet, danach mit einem RF-Signal aus dieser Position geworfen und letztlich die Relaxationszeit gemessen. Das wird dann durch unterschiedliche Grauwerte dargestellt. Verschiedene Gewebetypen haben unterschiedliche charakteristische Relaxationszeiten, dadurch können sie in den Abbildungen identifiziert werden. Auch bei der MR-Tomographie ist es möglich, den Kontrast durch Gabe eines Kontrastmittels zu erhöhen.

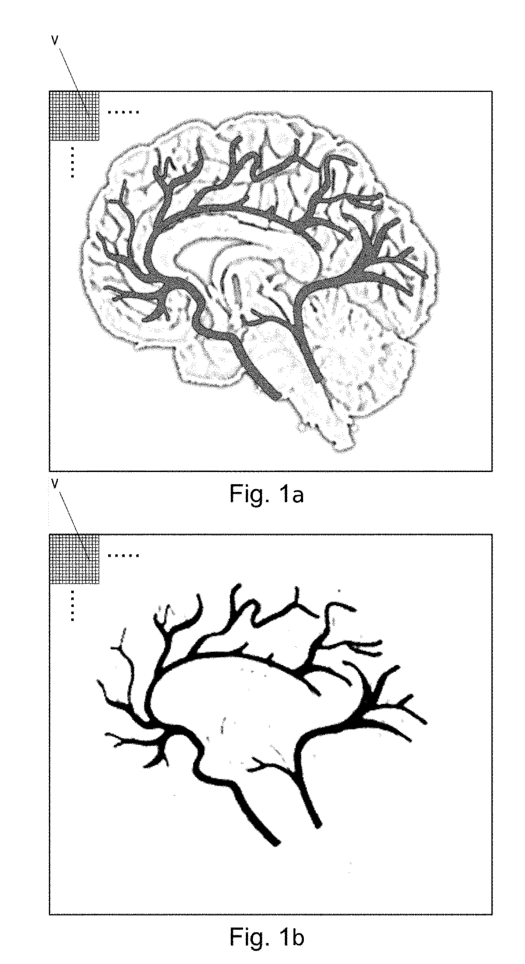

Nach der Durchführung des bildgebenden Verfahrens steht jeweils ein dreidimensionales Abbild von Voxeln v zur Verfügung, wobei jedem der Voxel v jeweils ein Messwerte m zugeordnet ist. Aufgrund der unterschiedlichen erzielbaren Messwerte m im Bereich der Blutgefäße und in den übrigen Gehirnstrukturen ist es möglich, durch Vergleich des jeweiligen Messwerts m im jeweiligen Voxel v mit einem Schwellenwert Th eine Teilmenge T des Abbilds zu isolieren, das sämtliche Voxel v enthält, auf die jeweils Blutgefäße abgebildet sind. Diesen Voxeln v wird zur Kenntlichmachung jeweils ein Segmentationsbit s zugeordnet. Diejenigen Voxel v, denen jeweils ein Segmentationsbit s zugeordnet wurde, sind in **Fig. 1b** schwarz dargestellt, die übrigen Voxel v sind weiß dargestellt.

Alternativ ist es auch möglich, anstelle eines Vergleichs des jeweiligen Messwerts m mit einem Schwellenwert den Gradienten oder dessen Betrag mit einem Schwellenwert zu vergleichen, um auf diese Weise zu bestimmen, ob das jeweilige Segmentationsbit gesetzt wird oder nicht. Der Gradient kann beispielsweise durch Heranziehen der Messwerte m in benachbarten Voxeln näherungsweise numerisch bestimmt werden.

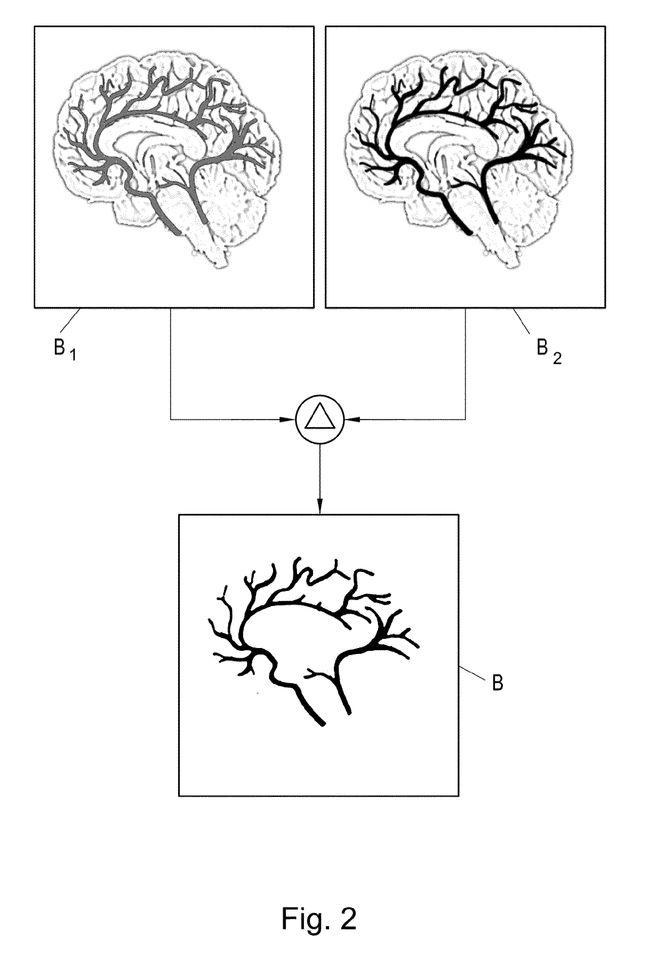

Anstelle der Verwendung einer einzelnen Aufnahme bzw. eines einzelnen dreidimensionalen Abbilds, wie dies bei MRT und CT üblich ist, kann, wie in **Fig. 2** dargestellt, auch ein Differenzbild zweier dreidimensionaler Schichtbilder B₁, B₂ als dreidimensionales Abbild B herangezogen werden, beispielsweise mittels DSA. Die beiden Schichtbilder B₁, B₂ werden dabei als separate Aufnahmen des Gehirns derselben Person erstellt. Das erste der beiden Schichtbilder B₁ wird ohne Gabe eines Kontrastmittels erstellt. Das zweite dreidimensionale Schichtbild B₂ wird erstellt, nachdem dem Probanden, dessen Gehirn bzw. dessen Blutgefäße im Gehirn aufgezeichnet wurden, ein Kontrastmittel verabreicht wurde.

Aufgrund der beiden zeitlich voneinander getrennten Aufnahmen können diese nicht immer einfach einander durch Addition überlagert werden, da der Kopf des Patienten bei jeder Aufnahme etwas unterschiedlich liegen kann. Die beiden dreidimensionalen Schichtbilder B₁, B₂ werden daher im Allgemeinen derart rotiert und verschoben, dass gleiche abgebildete Strukturen in denselben Voxeln v abgebildet werden. Anschließend wird voxelweise mittels einer Differenzbildungseinheit Δ die Differenz zwischen den Messwerten m der einzelnen Voxel v ermittelt. Das so entstandene Differenzbild wird als dreidimensionales Abbild B für die Lokalisation von Abbildern von Aneurysmen Y herangezogen.

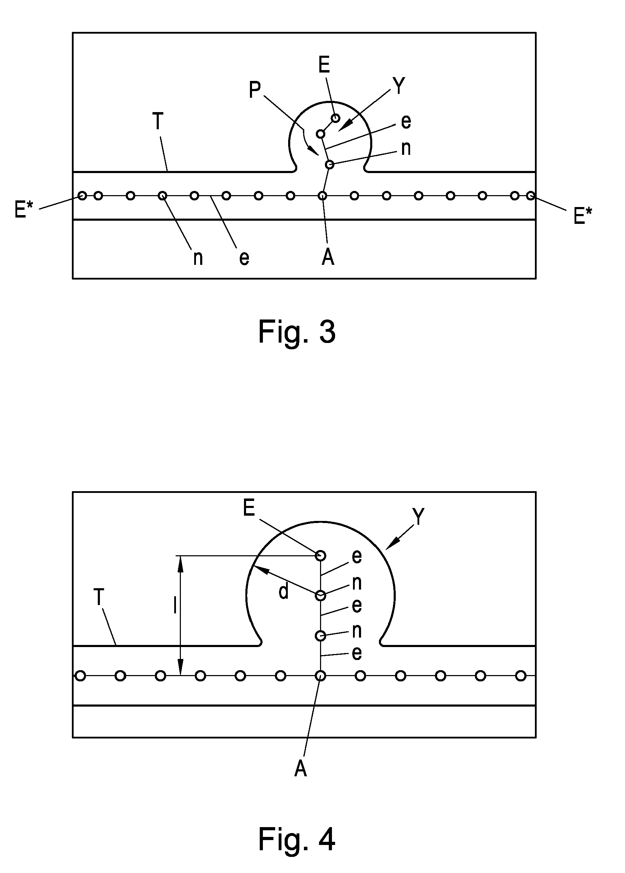

**Fig. 3** zeigt schematisch einen Teilbereich eines Schnitts durch das Abbild B sowie einen Teilgraphen des Graphen, der die Zusammenhänge der Blutgefäße im Gehirn repräsentiert. Im Inneren der Teilmenge T wird nach einer Anzahl von Pfaden P gesucht, die innerhalb der Teilmenge T verlaufende Verbindungen von Blutgefäßen repräsentieren. Die Pfade P werden durch eine Anzahl von auf den Pfaden P liegenden und miteinander über Kanten e verbundenen Knoten n repräsentiert. Die Gesamtheit aller Pfade P bildet einen zusammenhängenden Graphen und stellt den geometrischen und topologischen Verlauf der Blutgefäße im Inneren des aufgenommenen bzw. abgebildeten Gehirns dar. Um von der Teilmenge T auf die Pfade P, Kanten e und Knoten n zu gelangen, können aus dem Stand der Technik bekannte Vorgehensweisen wie etwa Mittellinienextraktion verwendet werden. Eine mögliche Vorgehensweise bei der Mittellinienextraktion ist zum Beispiel in "A Novel Robust Tube Detection Filter for 3D Centerline Extraction" von T. Pock et al., Proceedings of the 14th Scandinavian Conference on Image Analysis, Springer-Verlag, 2005, Seiten 481-490 beschrieben.

Um das Auftreten von Aneurysmen Y automatisiert detektieren zu können, wird zunächst das typische Aussehen von Aneurysmen Y erläutert: Bei Aneurysmen Y handelt es sich typischerweise um Aussackungen von Blutgefäßen, die von real bestehenden Blutgefäßen abstehen und zumeist nur eine kurze Länge l verglichen mit ihrer Dicke d aufweisen, während echte Blutgefäße normalerweise eine Länge l haben, die die Dicke wesentlich übersteigt. Pfaden P im Bereich eines Aneurysmas Y weisen jeweils zwei charakteristische Punkte auf, nämlich einerseits einen Endknoten E, der die lediglich über eine einzige Kante e mit einem weiteren Knoten n verbunden ist und andererseits einen Anschlussknoten A; hierbei handelt es sich um einen Knoten, der ausgehend vom jeweiligen Endknoten der erste Knoten ist, der über wenigstens drei Kanten e mit weiteren Knoten n verbunden ist. Es handelt sich bei dem Anschlussknoten A gleichsam um den Anschluss des Aneurysmas Y an das nächstgelegene Blutgefäß.

Um Strukturen aufzufinden, die eine topologische Struktur aufweisen, die der eines Aneurysmas entspricht, wird zunächst nach Knoten n wird, die lediglich über eine einzige Kante e mit einem weiteren Knoten n verbunden sind. Diese Knoten werden als Endknoten E markiert. Anschließend wird ausgehend vom jeweiligen Endknoten E der jeweils nächste Knoten n bestimmt wird, der über wenigstens drei Kanten e mit weiteren Knoten n verbunden ist. Dieser Knoten wird als Anschlussknoten A markiert und dem jeweiligen Endknoten E zugewiesen.

Nicht jede derart aufgefundene Konstellation von Blutgefäßen beinhaltet notwendigerweise auch ein Aneurysma. Vielmehr ist es, wie in **Fig. 4** dargestellt, zusätzlich erforderlich, dass, wie bereits erwähnt, das Verhältnis zwischen der Länge l und der Dicke d des jeweiligen Blutgefäßes einen Schwellenwert t unterschreitet.

Für die erkannten Endknoten E wird jeweils die Länge l des Pfads zwischen dem Endknoten E und dem jeweiligen Anschlussknoten A ermittelt. Anschließend wird von zumindest einem Punkt auf dem Pfad zwischen dem Endknoten E und dem Anschlussknoten A aus der maximale Radius d/2 ermittelt, innerhalb dessen sich ausschließlich der Teilmenge T zugehörige Voxel v befinden. Das Doppelte d dieses maximalen Radius d/2 wird dem Endknoten als Dicke d des Pfads P bzw. des Blutgefäßes zugewiesen.

Die Länge l kann entweder durch Bildung des Abstands zwischen dem Endknoten E und dem Anschlussknoten A oder durch Bildung der Summe der Längen aller zum jeweiligen Pfad zwischen dem Anschlussknoten A und dem Endknoten E gehörenden Kanten e gebildet werden.

Eine mögliche Vorgehensweise bei der Bestimmung der Dicke d sieht vor, dass in jedem Knoten n zwischen dem Endknoten E und dem Anschlussknoten A jeweils sämtliche Voxel v ermittelt werden, die sich innerhalb eines vorgegebenen Abstands um den Knoten n befinden. Sofern sämtliche der Voxel n zur Teilmenge T gehören, ist das Blutgefäß dicker als der Abstand. Der Abstand kann so lange erhöht werden, bis innerhalb des Abstands um den jeweiligen Knoten n Voxel v aufgefunden werden, die nicht zur Teilmenge T gehören. Der größte Abstand, innerhalb dessen sich ausschließlich zur Teilmenge T gehörige Voxel v befinden, wird als Dicke d bezeichnet.

Für den Fall, dass bei das Verhältnis zwischen Länge l und Dicke d des Pfads einen vorgegebenen Schwellenwert t von z.B. 1:1 unterschreitet, wird die Umgebung des Pfades P, insbesondere im Bereich des Endknotens E, als Bereich angesehen, in dem sich ein Abbild eines Aneurysmas Y befindet.

Aufgrund der beschränkten Auflösung der bildgebenden Verfahren kann es erforderlich sein, die fehlerhafte Detektion von Aneurysmen Y auszuschließen. Wenn die Länge l des Pfades P zwischen dem Anschlussknoten A und dem Endknoten E einen vorgegebenen Wert unterschreitet, kann das Vorliegen eines relevanten Aneurysmas Y ausgeschlossen werden. Der hier verwendete Schwellenwert kann beispielsweise bei einer Länge von 1 mm angenommen werden.

Nicht jede Aufnahme kann den gesamten Körper des Menschen bzw. das gesamte Gehirn abbilden. Aufgrund des beschränkten Aufnahmebereichs wird die Aufnahme abgeschnitten. Durch das Abschneiden können in den Endbereichen des Bilds Strukturen auftreten, die eventuell als Aneurysmen Y erkannt werden können, insbesondere, weil der am Rand liegende Knoten fälschlicherweise als Endknoten E* **(****Fig. 3****)** detektiert werden kann. Liegt ein Endknoten E* im Randbereich des dreidimensionalen Abbilds B, kann das Vorliegen eines Aneurysmas Y ausgeschlossen werden.

Ein weiterer bevorzugter Aspekt der Erfindung betrifft die konkrete Bestimmung des durch das Aneurysma Y eingenommenen Raumbereichs sowie des durch das Aneurysma eingenommenen Volumens. Gerade bei der operativen Verfüllung von Aneurysmen ist es von großer praktischer Relevanz, zu bestimmen, in wie weit das bestehende Aneurysma verfüllt wurde. Zu diesem Zweck ist es von Vorteil, das Volumen vor und nach der Operation genau zu kennen und zueinander ins Verhältnis zu setzen.

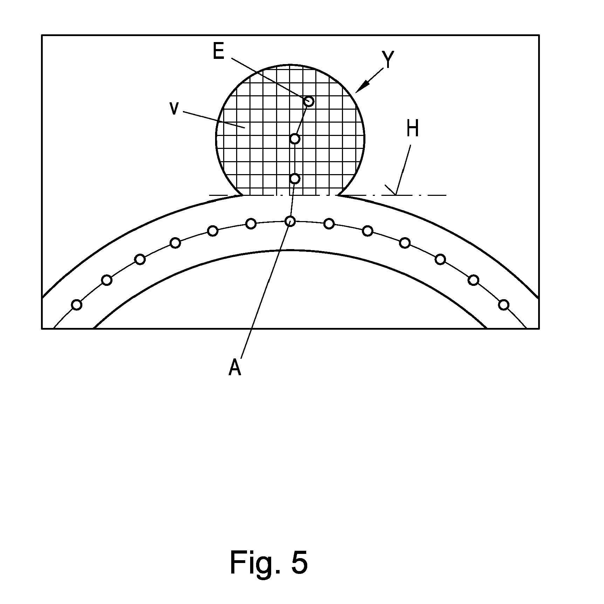

Nach der Erkennung eines Aneurysmas Y wird, wie in **Fig. 5** dargestellt, eine Ebene H festgelegt, die die Verbindungskante e des Endknotens E zum Anschlussknoten A durchschneidet und den Bereich des Abbilds des Aneurysmas von den übrigen Voxeln v der Teilmenge T abtrennt. Es werden sämtliche Voxel v gesucht, die sich auf derselben Seite der Ebene H befinden wie der Endknoten E des Aneurysmas Y und die sich vom Endknoten E des Aneurysmas Y ausschließlich über innerhalb der Teilmenge T befindliche Voxel v erreichen lassen. Diese Voxel v werden dem Aneurysma Y zugeordnet. Sofern die Voxel v gleich groß sind - dies ist bei Schichtbildaufnahmen B üblicherweise der Fall - reicht es aus, die einzelnen Voxel v zu zählen, um ein Maß für das Volumen des jeweiligen Aneurysmas Y zu erhalten. Das genaue Volumen kann durch Multiplikation der Anzahl der Voxel v mit dem Volumen eines Voxels v ermittelt werden. Sind die einzelnen Voxel v hingegen nicht gleich groß, ist es ebenfalls möglich, das das Gesamtvolumen dieser Voxel v als Maß für das Volumen V des Aneurysmas Y durch Summation der einzelnen Volumina der dem Aneurysma Y zugeordneten Voxel v zu ermitteln.

In **Fig. 6** ist eine Anordnung zur Lokalisation von Aneurysmen dargestellt. Diese Anordnung verfügt über eine Aufnahmeeinheit 1 zur Erstellung von Abbildern B. Die erstellten Abbilder B werden in einer Speichereinheit 2 abgespeichert. Die abgespeicherten Abbilder B werden anschließend einer Verarbeitungseinheit 3 zugeführt, die - wie vorstehend dargestellt, die Position, sowie gegebenenfalls auch das Volumen, des jeweiligen Aneurysmas Y erkennt. In dieser vorteilhaften Ausführungsform der Erfindung weist die Anordnung auch noch einen Bildschirm 4 auf, auf dem das Abbild B oder das Volumen des Abbilds B dargestellt wird. Die Position des Aneurysmas Y sowie der vom Aneurysma Y eingenommene Raumbereich werden ebenfalls auf dem Bildschirm 4 dargestellt.

Bei der dargestellten Ausführungsform handelt es sich lediglich um eine Möglichkeit, die Erfindung zu benutzen. Es ist auch möglich, dass die Anordnung nicht über eine eigene Aufnahmeeinheit 1 verfügt sondern lediglich eine Speichereinheit 2 aufweist, auf der sich Abbilder B befinden. Auch kann anstelle eines Bildschirms 4 eine andere Einheit zur Darstellung der jeweiligen Position des Aneurysmas Y verwendet werden. Es ist auch möglich, dass die Position des Aneurysmas Y an eine elektronischen Navigationshilfe für einen operativen Eingriff übermittelt und während des operativen Eingriffs dargestellt wird.

## Patentansprüche

1. Verfahren zur Lokalisation von Abbildern von Aneurysmen (Y) in dreidimensionalen Abbildern (B), insbesondere in MR- oder CT-Schichtbildern, umfassend eine Anzahl von dreidimensional, insbesondere rasterförmig und/oder strukturiert, angeordneten Voxeln (v), denen jeweils mindestens ein Messwert (m) zugeordnet ist,
- wobei für jedes Voxel (v) einzeln geprüft wird, ob der dem jeweiligen Voxel (v) zugeordnete Messwert (m) einem vorab vorgegebenen Kriterium (K) genügt und für den Fall, dass der Messwert (m) das Kriterium (K) erfüllt, dem jeweiligen Voxel (v) ein Segmentationsbit (s) zugeordnet wird, und die Teilmenge (T) der das Segmentationsbit (s) enthaltenden Voxel (v) ermittelt wird,
- wobei eine Anzahl von im Inneren der Teilmenge (T) verlaufenden Pfaden (P) gesucht wird, die innerhalb der Teilmenge verlaufenden Verbindungen repräsentieren, wobei die Pfade (P) durch eine Anzahl von auf den Pfaden (P) liegenden und miteinander über Kanten (e) verbundenen Knoten (n) repräsentiert werden, und wobei alle Pfade (P) einen zusammenhängenden Graphen bilden,
- wobei nach Knoten (n) gesucht wird, die lediglich über eine einzige Kante (e) mit einem weiteren Knoten (n) verbunden sind und diese Knoten (n) als Endknoten (E) markiert werden,
- wobei ausgehend vom jeweiligen Endknoten (E) der jeweils nächste Knoten (n) bestimmt wird, der über wenigstens drei Kanten (e) mit weiteren Knoten (n) verbunden ist und dieser Knoten (n) als Anschlussknoten (A) diesem Endknoten (E) zugewiesen wird,
- wobei für die Endknoten (E) jeweils die Länge (l) des Pfads zwischen dem Endknoten (E) und dem jeweiligen Anschlussknoten (A) ermittelt wird, und
- wobei von zumindest einem Punkt auf dem Pfad zwischen dem Endknoten und dem Anschlussknoten aus der maximale Radius (d/2) ermittelt wird, innerhalb dessen sich ausschließlich der Teilmenge (T) zugehörige Voxel (v) befinden und das Doppelte dieses maximalen Radius' (d/2) dem Endknoten als Dicke (d) des Pfads (P) zugewiesen wird, und für den Fall, dass das Verhältnis zwischen Länge (l) und Dicke (d) des Pfads einen vorgegebenen Schwellenwert (t) unterschreitet, die Umgebung des Pfades, insbesondere im Bereich des Endknotens (E), als Bereich angesehen wird, in dem sich ein Abbild eines Aneurysmas (Y) befindet.

2. Verfahren nach Anspruch 1, **dadurch gekennzeichnet, dass** bei der Zuordnung des Segmentationsbits (s) zu den Voxeln (v) ein Schwellenwertvergleich verwendet wird,
- wobei der jeweilige dem Voxel (v) zugeordnete Messwert (m) mit einem vorab vorgegebenen Schwellenwert (Th) verglichen wird und das Segmentationsbit (s) für das jeweilige Voxel (v) bei Überschreiten oder bei Unterschreiten des Schwellenwerts (Th) gesetzt wird oder
- wobei der Gradient des jeweiligen Messwerts (m) ermittelt wird und das Segmentationsbit (s) für das jeweilige Voxel (v) gesetzt wird, wenn der Gradient des jeweiligen Messwerts einen vorgegebenen weiteren Schwellenwert überschreitet oder unterschreitet.

3. Verfahren nach einem der vorangehenden Ansprüche, **dadurch gekennzeichnet, dass** Pfade (P), deren zugeordnete Länge (l) einen vorgegebenen Wert unterschreitet, nicht für die Suche nach Aneurysmen herangezogen werden.

4. Verfahren nach einem der vorangehenden Ansprüche, **dadurch gekennzeichnet, dass** Pfade (P), deren Endknoten (E) sich im Randbereich des dreidimensionalen Abbildes (B) befinden, nicht für die Erkennung von Aneurysmen herangezogen werden.

5. Verfahren nach einem der vorangehenden Ansprüche, **dadurch gekennzeichnet,**
- **dass** als dreidimensionales Abbild (B) das Differenzbild zweier dreidimensionaler Schichtbilder (B₁, B₂) herangezogen wird, wobei das erste der Schichtbilder (B₁) ohne Gabe eines Kontrastmittels erstellt wurde und das zweite dreidimensionale Schichtbild (B₂) erstellt wurde, nachdem dem Probanden, dessen Gefäße aufgezeichnet wurden, ein Kontrastmittel verabreicht wurde, - dass anschließend voxelweise die Differenz zwischen den Messwerten (m) der einzelnen Voxel (v) ermittelt wird
- **dass** das so ermittelte Differenzbild als dreidimensionales Abbild (B) für die Lokalisation von Abbildern von Aneurysmen (Y) herangezogen wird, und
- insbesondere dass die beiden dreidimensionalen Schichtbilder (B₁, B₂) vor der Differenzbildung derart rotiert oder verschoben werden, dass gleiche abgebildete Strukturen in denselben Voxeln (v) abgebildet sind.

6. Verfahren nach einem der vorangehenden Ansprüche, **dadurch gekennzeichnet, dass** nach der Erkennung eines Aneurysmas (Y) eine Ebene (H) festgelegt wird, die die Verbindungskante (e) des Endknotens (E) zum Anschlussknoten (A) durchschneidet und den Bereich des Abbilds des Aneurysmas von den übrigen Voxeln (v) der Teilmenge (T) abtrennt, wobei sämtliche Voxel (v) gesucht werden, die sich auf derselben Seite der Ebene (H) befinden wie der Endknoten (E) des Aneurysmas (Y) und die sich vom Endknoten (E) des Aneurysmas (Y) ausschließlich über innerhalb der Teilmenge (T) befindliche Voxel (v) erreichen lassen und diese Voxel (v) dem Aneurysma (Y) zugeordnet werden.

7. Verfahren nach Anspruch 6, **dadurch gekennzeichnet, dass** zur Bestimmung des Volumens eines aufgefundenen Aneurysmas (Y) die Anzahl und/oder das Volumen dieser Voxel ermittelt wird und die Anzahl der dem Aneurysma (Y) zugeordneten Voxel (v) oder das Gesamtvolumen dieser Voxel als Maß für das Volumen (V) des Aneurysmas (Y) herangezogen wird.

8. Anordnung zur Lokalisation von Abbildern von Aneurysmen (Y) in dreidimensionalen Abbildern (B), insbesondere in MR- oder CT-Schichtbildern, umfassend einen Speicher (2) in dem Abbilder (B) mit einer Anzahl von dreidimensional, insbesondere rasterförmig und/oder strukturiert, angeordneten Voxeln (v), denen jeweils mindestens ein Messwert (m) zugeordnet ist,
- wobei eine dem Speicher (2) nachgeschaltete Verarbeitungseinheit (3) vorgesehen ist, der die Abbilder (B) des Speichers (2) zugeführt sind und die für jedes Voxel (v) einzeln prüft, ob der dem jeweiligen Voxel zugeordnete Messwert (m) einem vorab vorgegebenen Kriterium (K) genügt und für den Fall, dass der Messwert (m) das Kriterium (K) erfüllt, dem jeweiligen Voxel (v) ein Segmentationsbit (s) zuordnet, und somit die Teilmenge (T) der das Segmentationsbit (s) enthaltenden Voxel (v) ermittelt,
- wobei die Verarbeitungseinheit (3) eine Anzahl von im Inneren der Teilmenge (T) verlaufenden Pfaden (P) sucht, die innerhalb der Teilmenge verlaufenden Verbindungen repräsentieren, wobei die Pfade (P) durch eine Anzahl von auf den Pfaden (P) liegenden und miteinander über Kanten (e) verbundenen Knoten (n) repräsentiert sind, und wobei alle Pfade (P) einen zusammenhängenden Graphen bilden,
- wobei die Verarbeitungseinheit (3) nach Knoten (n) sucht, die lediglich über eine einzige Kante (e) mit einem weiteren Knoten (n) verbunden sind und diese Knoten (n) als Endknoten (E) markiert,
- wobei die Verarbeitungseinheit (3) ausgehend vom jeweiligen Endknoten (E) den jeweils nächsten Knoten (n) bestimmt, der über wenigstens drei Kanten (e) mit weiteren Knoten (n) verbunden ist und dieser Knoten (n) als Anschlussknoten (A) diesem Endknoten (E) zuweist,
- wobei die Verarbeitungseinheit (3) für die Endknoten (E) jeweils die Länge (l) des Pfads zwischen dem Endknoten (E) und dem jeweiligen Anschlussknoten (A) ermittelt, und
- wobei die Verarbeitungseinheit (3) von zumindest einem Punkt auf dem Pfad zwischen dem Endknoten und dem Anschlussknoten aus der maximale Radius (d/2) ermittelt, innerhalb dessen sich ausschließlich der Teilmenge (T) zugehörige Voxel (v) befinden und sie das Doppelte dieses maximalen Radius (d/2) dem Endknoten als Dicke (d) des Pfads (P) zuweist, wobei sie für den Fall, dass bei das Verhältnis zwischen Länge (l) und Dicke (d) des Pfads einen vorgegebenen Schwellenwert (t) unterschreitet, die Umgebung des Pfades, insbesondere im Bereich des Endknotens (E), als Bereich markiert, in dem sich ein Abbild eines Aneurysmas (Y) befindet.

9. Anordnung nach Anspruch 8, **dadurch gekennzeichnet, dass** die Verarbeitungseinheit (3) bei der Zuordnung des Segmentationsbits (s) zu den Voxeln (v) einen Schwellenwertvergleich verwendet,
wobei sie den jeweiligen dem Voxel (v) zugeordneten Messwert (m) mit einem vorab vorgegebenen Schwellenwert (Th) vergleicht und das Segmentationsbit (s) für das jeweilige Voxel (v) bei Überschreiten oder bei Unterschreiten des Schwellwerts (Th) durch den jeweiligen Messwert setzt, oder
wobei sie den Gradienten des jeweiligen dem Voxel (v) zugeordneten Messwerts (m) bildet und diesen mit einem vorab vorgegebenen Schwellenwert (Th) vergleicht und das Segmentationsbit (s) für das jeweilige Voxel (v) bei Überschreiten oder bei Unterschreiten des Schwellwerts (Th) durch den jeweiligen Grenzwert setzt

10. Anordnung nach Anspruch 8 oder 9, **dadurch gekennzeichnet, dass** die Verarbeitungseinheit (3) Pfade (P), deren zugeordnete Länge (l) einen vorgegebenen Wert unterschreitet, verwirft und nicht für die Suche nach Aneurysmen heranzieht, und/oder dass die Verarbeitungseinheit (3) Pfade (P), deren Endknoten (E) sich im Randbereich des dreidimensionalen Abbildes (B) befinden, verwirft und nicht für die Erkennung von Aneurysmen heranzieht.

11. Anordnung nach einem der Ansprüche 8 bis 10, **dadurch gekennzeichnet, dass** eine Differenzbildungseinheit (Δ) vorgesehen ist, der erstellte und zwischengespeicherte oder abgespeicherte Schichtbilder (B₁, B₂) zugeführt sind,
- dass die Differenzbildungseinheit (Δ) anschließend voxelweise die Differenz zwischen den Messwerten (m) der einzelnen Voxel (v) ermittelt und derart ein Differenzbild (B) erstellt und als Abbild (B) für die weitere Verarbeitung durch die Verarbeitungseinheit (3) zur Verfügung hält, und
- dass insbesondere die Differenzbildungseinheit (Δ) die beiden dreidimensionalen Schichtbilder (B₁, B₂) vor der Differenzbildung derart rotiert oder verschiebt, dass gleiche abgebildete Strukturen in denselben Voxeln (v) abgebildet werden.

12. Anordnung nach einem der Ansprüche 8 bis 11, **gekennzeichnet durch** eine Aufnahmeeinheit (1) zur Aufnahme von dreidimensionalen Abbildern (B), wobei die von der Aufnahmeeinheit (1) erstellten Abbilder (B) dem Speicher (2) zugeführt werden, und/oder dass eine der Verarbeitungseinheit (3) nachgeschaltete Anzeigeeinheit vorhanden ist, insbesondere ein Bildschirm (4), zur Darstellung des Abbilds (B), die neben jeweiligen Abbild (B) auch die Position des jeweiligen Aneurysmas (Y) graphisch darstellt.

13. Anordnung nach einem der Ansprüche 8 bis 12, **dadurch gekennzeichnet, dass** die Verarbeitungseinheit (3) zur Erkennung eines Aneurysmas (Y) eine Ebene (H) festlegt, die die Verbindungskante (e) des Endknotens (E) zum Anschlussknoten (A) durchschneidet und den Bereich des Abbilds des Aneurysmas von den übrigen Voxeln (v) der Teilmenge (T) abtrennt, wobei sie sämtliche Voxel (v) sucht, die sich auf derselben Seite der Ebene (H) befinden wie der Endknoten (E) des Aneurysmas (Y) und die sich vom Endknoten (E) des Aneurysmas (Y) ausschließlich über innerhalb der Teilmenge (T) befindliche Voxel (v) erreichen lassen, wobei die Verarbeitungseinheit (3) diese Voxel (v) dem Aneurysma (Y) zuordnet und gegebenenfalls die Anzeigeeinheit (4) zur graphischen Darstellung der dem Aneurysma (Y) zugeordneten Voxel (v) veranlasst.

14. Anordnung nach Anspruch 13, **dadurch gekennzeichnet, dass** die Verarbeitungseinheit (3) zur Bestimmung des Volumens eines aufgefundenen Aneurysmas (Y) die Anzahl und/oder das Volumen dieser Voxel ermittelt und die Anzahl der dem Aneurysma (Y) zugeordneten Voxel (v) oder das Gesamtvolumen dieser Voxel als Maß für das Volumen (V) des Aneurysmas (Y) heranzieht und insbesondere die Anzeigeeinheit (4) zur graphischen Darstellung des Volumens des Aneurysmas (Y) veranlasst.

15. Datenträger auf dem ein Programm zur Durchführung eines Verfahrens nach einem der Ansprüche 1 bis 7 abgespeichert ist.
